# EUROPÄISCHE PATENTSCHRIFT

(11) **EP 0 780 682 B1**
(45) Veröffentlichungstag und Bekanntmachung des Hinweises auf die Patenterteilung: **25.09.2002**
(21) Anmeldenummer: 96117416.6
(22) Anmeldetag: 30.10.1996
(51) Int. Cl.: G01N 21/71, G01B 11/06

(54) **Verfahren und Vorrichtung zum zerstörungsfreien Prüfen von Werkstücken**
Method and device for nondestructive testing of workpieces
Méthode et dispositif pour l'examen non destructif de pièces à usiner

(30) Priorität: 21.12.1995 DE 19548036
(43) Veröffentlichungstag der Anmeldung: 25.06.1997
(73) Patentinhaber: WAGNER INTERNATIONAL AG, 9450 Altstätten (CH)
(72) Erfinder: Prekel, Helmut, 88131 Lindau (DE); Adams, Horst, Dr., 88149 Nonnenhorn (DE)
(74) Vertreter: Liesegang, Eva

(56) Entgegenhaltungen:
- EP-A- 0 142 823
- EP-A- 0 458 601
- EP-A- 0 609 193
- DE-A- 3 234 534

## Beschreibung

Die Erfindung betrifft ein Verfahren zum zerstörungsfreien Prüfen von Werkstücken, bei dem ein elektromagnetischer, intensitätsmodulierter Anregungsstrahl auf eine Prüfstelle einer Werkstückoberfläche gerichtet wird und von der Prüfstelle abgegebene Wärmestrahlung erfaßt und ausgewertet wird. Die Erfindung betrifft ferner eine Vorrichtung zum zerstörungsfreien Prüfen von Werkstücken, welche eine Anregungsquelle zum Abgeben eines elektromagnetischen Anregungsstrahls, eine optische Einrichtung, welche die Intensität des Anregungsstrahls moduliert und den Anregungsstrahl auf eine Prüfstelle einer Werkstückoberfläche richtet, und eine Detektoreinrichtung zum Erfassen der von der Prüfstelle abgegebenen Wärmestrahlung aufweist.

Die zerstörungsfreie und kontaktlose Materialprüfung mittels einer thermischen Anregung von Oberflächen durch intensitätsmodulierte Strahlung und Auswertung des zeitlichen Verlaufs der von der Oberfläche abgegebenen Wärmestrahlung ist ein seit einigen Jahren bewährtes Verfahren. Das zugrundeliegende Prinzip, welches auch als photothermische Radiometrie bekannt ist, basiert auf der Erzeugung von Temperaturwellen in einem Prüfgegenstand, welche sich in einer für die Materialbeschaffenheit des Prüfgegenstandes charakteristischen Weise ausbreiten und ähnlich wie Ultraschallwellen an thermischen Inhomogenitäten, wie Schichtgrenzen, Delaminationen, Rissen, Poren etc., gestreut bzw. reflektiert werden. Wesentliche Unterschiede zu Ultraschallverfahren sind eine stärkere Dämpfung und eine erheblich geringere Ausbreitungsgeschwindigkeit. Die reflektierten bzw. gestreuten Anteile der Temperaturwelle interferieren mit der Ursprungsoder Anregungswelle und bilden, zum Teil auch nach Mehrfachreflexionen bzw. -streuungen, einen Summenvektor der Temperaturwelle. Dieser beinhaltet als Meßinformation über das zu prüfende Werkstück einen Vektorbetrag sowie eine Phase, wobei der Vektorbetrag wegen seiner starken Abhängigkeit von äußeren Faktoren, wie Meßabstand und Einstrahlwinkel, welche bei einer industriellen Anwendung nicht präzise genug einstellbar sind, kaum verwertbar ist. Die Phase dagegen ist von diesen Parametern, und sogar von der Leistung der intensitätsmodulierten Anregungsstrahlung, weitgehend unabhängig, so daß sie verläßlich ausgewertet werden kann. Aufgrund der Phasenverschiebung der vom Werkstück emittierten Infrarot-Wärmestrahlung relativ zur eingestrahlten Anregungsstrahlung kann die Beschaffenheit, z.B. Dicke, einer Werkstückoberfläche ermittelt werden.

Es ist zweckmäßig, die Anregungsstrahlung so zu wählen, daß ihre Wellenlänge(n) außerhalb des Empfindlichkeitsbereiches des Infrarotdetektors liegt (liegen). Dadurch wird vermieden, daß gestreute und/oder reflektierte Anregungsstrahlung im Detektor ein Störsignal erzeugt.

Die photothermische Radiometrie ist besonders für Werkstücke geeignet, welche thermisch dünn sind, wie Oberflächenbeschichtungen und Werkstückschutzschichten, weil dann die Interferenzen der Temperaturwellen am deutlichsten auftreten. Weitere theoretische Aspekte zu der photothermischen Radiometrie finden sich in C.A. Bennett, Jr. und R.R. Patty "Thermal Wave Interferometry: A Potential Application of the Photoacoustic Effect", Applied Optics, Band 21, Nr. 1, 1. Januar 1982, Seiten 49 bis 54.

Eine Vorrichtung zur zerstörungsfreien Materialprüfung ist aus der EP-A-0 609 193 bekannt. Hier wird ein modulierter Laserstrahl oder ein kontinuierlicher Laserstrahl, der mit einem mechanischen Unterbrecher moduliert (periodisch unterbrochen) wird, auf eine Prüfoberfläche gerichtet, so daß auf dieser eine periodische Erwärmung herbeigeführt wird, welche mit einem Infrarotdetektor erfaßt, umgewandelt und zur Auswertung einem Rechner zugeführt wird, um die Porösität von Reibbelägen zu bestimmen.

Eine weitere Anordnung zur photothermischen Materialprüfung bzw. zur Schichtdickenmessung lehrte die DE-A-36 31 652. Fig. 1 dieser Druckschrift zeigt einen Heizstrahler, dem ein Modulator nachgeschaltet ist, so daß intensitätsmodulierte Strahlung, in diesem Fall über eine Faser, der Prüfoberfläche zugeführt wird.

Die in solchen System eingesetzte Anregungsquelle zur Erzeugung des Anregungsstrahls ist in der Regel eine kostenintensive Komponente, insbesondere dann, wenn es sich wie bei der EP-A-0 609 193 um einen Laser handelt; neben den hohen Beschaffungs- und Wartungskosten treten zum Teil auch erhebliche Betriebskosten auf, die unter anderem aufgrund des schlechten Wirkungsgrades mancher Laser, und somit einem hohen Energieverbrauch, und dem großen Aufwand für die Kühlung des Lasers entstehen.

Bei den genannten Beispielen für photothermische Prüfgeräte wird die Anregungsquelle zur Erzeugung des intensitätsmodulierten Anregungsstrahls jeweils nur zu maximal 50% ausgenutzt, wobei in der modulierten Betriebsart des Lasers der EP-A-0 609 193 zumindest die erzeugte Strahlung vollständig ausgenutzt wird, nicht jedoch das Lasergerät selbst, während bei der Modulation einer kontinuierlichen Strahlung mit einem Unterbrecher, wie in der EP-A-0 609 193 und der DE-A-36 31 652, 50% der erzeugten Strahlungsenergie ungenutzt bleiben. Dieses Ausblenden von 50% der Strahlungsenergie kann sogar zu thermischen Problemen innerhalb des Gerätes und unter Umständen zu Signalverfälschungen aufgrund von "vagabundierender" Infrarotstrahlung führen.

Für viele industrielle Anwendungen ist es erforderlich oder wünschenswert, die Oberfläche eines Werkstücks an mehreren verschiedenen Stellen möglichst gleichzeitig zu prüfen. Eine typische Beschichtungsanlage zum Beispiel besteht aus einem Fördersystem, mit dem Werkstücke durch eine Besichtungskabine gefahren werden, in der jedes Werkstück auf zwei Seiten oder paarweise nebeneinander geförderte Werkstücke auf je einer Seite mit einem Lack beaufschlagt werden. Da die beiden Seiten der Beschichtungsanlage in der Regel nicht völlig gleichmäßig arbeiten, also nicht automatisch dieselben Schichtdicken bei denselben Betriebsparametern liefern, ist es für die Qualitätsprüfung erforderlich, beide Beschichtungsseiten meßtechnisch zu überwachen.

Bei Verwendung von Meßsystemen, wie den in der EP-A-0 609 193 oder der DE-A-36 31 652 beschriebenen, ist für jede Meßposition ein vollständiges Meß- oder Prüfsystem, also auch jeweils eine eigene Anregungsquelle erforderlich. Es ist bisher keine Vorrichtung bekannt, die es gestattet, mit einer einzigen Anregungsquelle mehrere Punkte auf einem zu prüfenden Werkstück gleichzeitig zu analysieren.

Der Erfindung liegt daher die Aufgabe zugrunde, ein Verfahren und eine Vorrichtung zum zerstörungsfreien Prüfen von Werkstücken anzugeben, mit denen gleichzeitig mehrere Stellen eines Werkstücks geprüft werden können, wobei die Anschaffungs- und Betriebskosten gegenüber dem Stand der Technik reduziert werden sollen.

Diese Aufgabe wird erfindungsgemäß durch ein Verfahren mit den Merkmalen von Anspruch 1 und eine Vorrichtung mit den Merkmalen von Anspruch 5 gelöst. Mit dem erfindungsgemäßen Verfahren und der Vorrichtung ist es möglich, bei einer nahezu 100%igen Ausnutzung der Strahlungsleistung einer einzelnen Anregungsquelle mehrere Stellen eines oder mehrerer Werkstücke gleichzeitig zu prüfen. Somit kann mit dem erfindungsgemäßen Verfahren und der Vorrichtung zum Beispiel in einer Beschichtungsanlage die Schichtdicke an beiden Beschichtungsseiten gemessen werden.

Bei dem erfindungsgemäßen Verfahren und der Vorrichtung gibt eine Anregungsquelle kontinuierlich einen Anregungsstrahl ab, der durch ein geeignetes Bauteil periodisch zwischen mindestens zwei Richtungen oder Winkelpositionen (Kanälen) umgeschaltet wird. Dadurch wird die Strahlungsleistung der Anregungsquelle zu 100% ausgenutzt und wechselweise auf einen der Kanäle geschaltet. Wenn zwei Winkelpositionen und somit zwei Kanäle vorgesehen werden, ergibt sich ein Tastverhältnis von 50% der modulierten Anregungsstrahlung, wobei die Anregungsstrahlen beider Kanäle zueinander um 180° phasenverschoben sind. Die so modulierte Strahlungsleistung der beiden Kanäle steht nun für die thermische Anregung von wenigstens zwei unterschiedlichen Prüfstellen, z.B. auf den verschiedenen Seiten eines Werkstückes in einer Beschichtungsanlage, zur Verfügung. Die Prüfstellen an der Werkstückoberfläche erwärmen sich bei Auftreffen der Anregungsstrahlung periodisch. Das zeitliche Temperaturverhalten der Prüfstellen, welches charakteristisch für die Oberflächenbeschaffenheit, wie Schichtdicke, Schichthaftung und Zusammensetzung, ist, wird radiometrisch für jeden Meßpunkt einzeln erfaßt und mit einer geeigneten Elektronik und Software ausgewertet. Die Phasenverschiebung der Anregungsstrahlung von 180° kann bei der Signalauswertung völlig problemlos berücksichtigt werden. Jeder Anregungsstrahl kann wiederum, z.B. mittels eines Strahlenteilers, in zwei oder mehrere Komponenten aufgespalten werden, um die Anzahl der auswertbaren Meßpunkte zu erhöhen.

Eine verwandte Anordnung dieser Art ist in S.O. Kanstad "Experimental Aspects of Photothermal Radiometry", CAN.J.PHYS. Band 64, 1986, Seiten 1155 bis 1164 beschrieben. Dort wird ein verspiegeltes Chopperrad dazu verwendet, die Anregungsstrahlung zu modulieren und 50% der Strahlung auszukoppeln und einem Leistungsmesser zuzuführen, da bei dieser Ausführungsform das Meßsystem auf die Laserleistung normiert werden muß. Wie jedoch eingangs erwähnt wurde, wird bei der photothermischen Oberflächenprüfung vorzugsweise die Phase der induzierten Temperaturschwingung verwertet, so daß eine Leistungsmessung in der Regel nicht notwendig ist, wodurch der entsprechende Teil der Anregungsstrahlung für die Anregung einer weiteren Prüfstelle zur Verfügung steht.

Weitere Vorteile und Merkmale der vorliegenden Erfindung ergeben sich aus der folgenden detaillierten Beschreibung bevorzugter Ausführungsformen mit Bezug auf die Zeichnung. In den Figuren zeigen:
- Fig. 1: eine schematische Darstellung einer ersten Ausführungsform der Erfindung,
- Fig. 2: eine schematische Darstellung einer zweiten Ausführungsform der Erfindung, und
- Fig. 3: eine schematische Darstellung einer dritten Ausführungsform der Erfindung.

Entsprechende Komponenten sind in den drei Figuren mit denselben Bezugszeichen gekennzeichnet und werden nur einmal beschrieben.

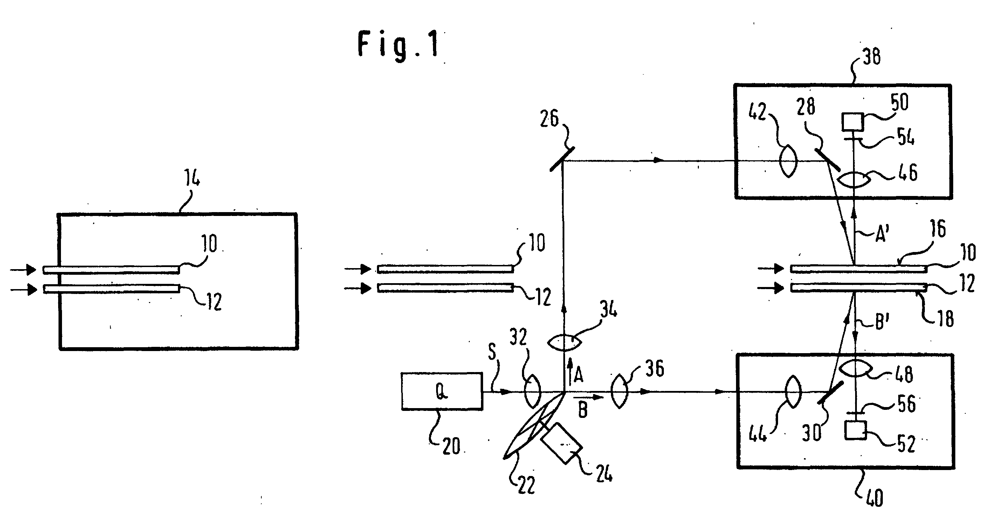

In Fig. 1 ist schematisch eine erste Ausführungsform der Erfindung dargestellt. Auf der linken Seite von Fig. 1 sind zwei nebeneinander liegende Werkstücke 10 und 12 dargestellt, welche in Pfeilrichtung in eine Beschichtungskabine, die ganz schematisch durch einen Kasten 14 dargestellt ist, eingebracht werden. In der Beschichtungskabine werden zwei außenliegende Beschichtungsseiten 16 und 18 der Werkstücke 10 und 12 beschichtet und gleichzeitig oder nachfolgend einer Oberflächenprüfung, z.B. einer Schichtdickenmessung oder einer Überprüfung der Oberflächenrauhigkeit, unterzogen.

Eine Anregungsquelle 20 erzeugt eine elektromagnetische Anregungsstrahlung S. Bei dieser Ausführungsform sei angenommen, daß die Anregungsquelle 20 eine Laserquelle ist, welche einen Laserstrahl S abgibt. Es ist jedoch auch Infrarotlicht oder eine elektromagnetische Anregungsstrahlung in einem anderen Wellenlängenbereich einsetzbar. Im Austrittspfad des Laserstrahls S ist ein drehbarer Spiegel 22 angeordnet, dessen Drehachse senkrecht zur Spiegelebene verläuft.

Der Spiegel 22 weist an seinem Umfang Aussparungen oder Einschnitte auf, und er wird kontinuierlich gedreht oder in schwingender Weise zwischen zwei definierten Winkelstellungen hin- und herbewegt, wobei je nach Stellung des Spiegels relativ zu dem auf die Spiegeloberfläche auftreffenden Anregungsstrahl S dieser Anregungsstrahl durchgelassen wird, wenn er auf eine Aussparung trifft, oder durch Reflexion umgelenkt wird. Gemäß einer bevorzugten Ausführungsform ist der Spiegel rund und an seinem Umfang sind in regelmäßigen Abständen Segmente ausgeschnitten.

Die drehbare Spiegelachse kann zum Beispiel die Achse eines Motors, eines Scanners oder eines Drehmagneten oder eine separate Drehachse sein, welche von einer der genannten Antriebsformen angesteuert wird.

Durch die Drehung bzw. das Hin- und Herschwenken des Spiegels 22 wird der kontinuierliche Anregungsstrahl S in einem Tastverhältnis von etwa 50% in zwei um etwa 180° phasenverschobene Anregungsstrahlen A und B moduliert wird. Die modulierten Anregungsstrahlen A und B können auch als Meßkanäle A und B betrachtet werden. Um dabei innerhalb des von der Anregungsstrahlung betroffenen Bereichs auf den Werkstückoberflächen alle Prüfstellen oder Flächenelemente gleichartig (d.h. mit demselben Tastverhältnis und gleicher Phase) thermisch anzuregen, ist es zweckmäßig, den Anregungsstrahl S möglichst weit von der Achse des Spiegels 22 entfernt auf die Spiegeloberfläche auftreffen zu lassen und den Strahlquerschnitt im Bereich der Spiegeloberfläche mittels einer vorgeschalteten Linse 32 kleinstmöglichst zu formen bzw. zu fokussieren, wodurch für beide Kanäle A und B der zeitliche Verlauf der intensitätsmodulierten Anregungsstrahlung nahezu rechteckig ist. Wenn der Anregungsstrahl achsfern auf den Spiegel gelenkt wird, haben Ungenauigkeiten der Spiegelgeometrie z.B. der Segmentausschnitte, die geringste Auswirkung.

Dem Spiegel 22 sind weitere Linsen 34 (im Kanal A) und 36 (im Kanal B) nachgeschaltet, welche der Kollimierung und gegebenenfalls zusammen mit der vorgeschalteten Linse 32 der Strahlaufweitung zur Strahlführung über größere Strecken dienen. Der Spiegel 26 dient der Strahlführung. Je nach individuellen Anforderungen und Gegebenheiten des Anwendungsfalls werden weitere optische Elemente, wie Spiegel, zur Strahlführung notwendig sein.

Die erreichbaren Modulationsfrequenzen sind von der Anzahl der Ausschnitte oder Segmente des Spiegels 22 sowie von dem Drehzahlbereich der Antriebsvorrichtung für den Spiegel abhängig, wobei bei einem Motor mit sehr gutem Gleichlauf Modulationsfrequenzen von unter einem Hertz bis einigen hundert Hertz erzielbar sind.

Die Anregungsstrahlen beider Kanäle A und B werden schließlich je einem Meßkopf 38 bzw. 40 zugeführt. In jedem Meßkopf wird der empfangene Anregungsstrahl A bzw. B mit refraktiven und/oder reflektiven optischen Elementen, Spiegel 28 und 30 und Linsen 42 und 44, geformt und zu den Prüfoberflächen 16 bzw. 18 der Werkstücke 10 und 12 gelenkt. Die von den Prüfstellen abgegebene Wärmestrahlung A' und B' ist ein abhängig von der Oberflächentemperatur emittierte Infrarotstrahlung, welche über eine Abbildungsoptik 46 bzw. 48 einem Detektor 50 bzw. 52 zugeführt wird, die bei der gezeigten Ausführungsform als Linse ausgebildet ist, jedoch z.B. auch ein Hohlspiegel sein kann. Den Detektoren 50 und 52 kann jeweils ein Filterelement 54 bzw. 56, z.B. ein Spaltfilter oder Kantenfilter, vorgeschaltet sein, welches unerwünschte Strahlungsanteile abblockt, wie die mit 50, 60 oder 100 Hertz modulierten Strahlungen im nahen Infrarotbereich aus einer Hallenbeleuchtung. Eine (nicht gezeigte) nachgeschaltete Verarbeitungselektronik und Auswerteeinheit verarbeitet die von den Detektoren erfaßte Wärmestrahlung, um z.B. die Schichtdicke einer Oberflächenbeschichtung zu erfassen.

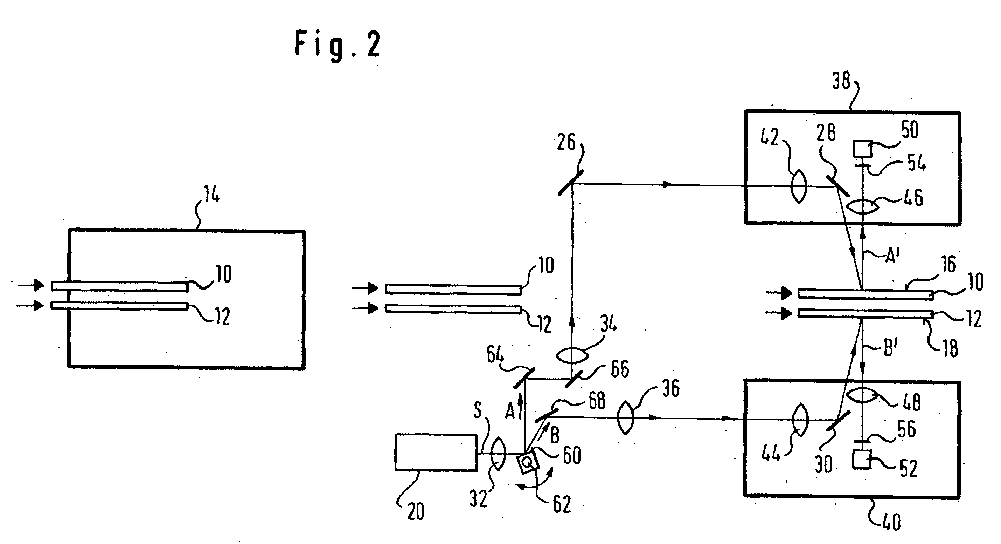

Fig. 2 zeigt eine weitere Ausführungsform der erfindungsgemäßen Prüfvorrichtung, wobei in Fig. 2 der drehbare Spiegel aus Fig. 1 zum Modulieren der Anregungsstrahlung durch einen kippbaren Spiegel 60 ersetzt ist. Ein nicht segmentierter Spiegel 60 ist auf einer schwingfähigen Achse 62 montiert, welche parallel zu der Spiegelebene verläuft und mit einer Antriebseinheit z.B. eines Scanners oder eines Drehmagneten verbunden ist. Die mechanische Achse 62 des Kippspiegels 60 verläuft zur Vermeidung von Unwuchten vorzugsweise durch den Schwerpunkt des Spiegels.

Der mit der Anregungsstrahlung S beaufschlagte Spiegel 60 wird bei Betrieb zwischen zwei definierten Winkelstellungen hin- und herbewegt, wobei der Anregungsstrahl zwischen zwei Richtungen umgelenkt wird, die einen Winkel einschließen, der doppelt so groß ist wie die Winkeldifferenz zwischen den beiden Kippstellungen des spiegels. Die beiden so erzeugten intensitätsmodulierten Anregungsstrahlen A und B werden, wie schon mit Bezug auf Fig. 1 beschrieben, periodisch zwei Meßköpfen 38 und 40 zugeführt. Bei dieser Ausführungsform sind Modulationsfrequenzen erzielbar, die größer als etwa 25 Hertz sind, weil die mechanische Trägheit des Schwingsystems keine genauso freie Einstellung des Tastverhältnisses erlaubt wie bei der Ausführungsform von Fig. 1.

Die Linse 32 dient dazu, den Anregungsstrahl S auf dem Spiegel 60 zu verkleinern bzw. zu fokussieren, wodurch der Spiegel 60 klein dimensioniert werden kann und das mechanische Schwingsystem eine geringere Trägheit aufweist. Die Linsen 34 und 36 dienen wie bei der Ausführungsform von Fig. 1 der Kollimierung und gegebenenfalls der Strahlaufweitung, die Spiegel 26, 64, 66 und 68 dienen der Strahlführung.

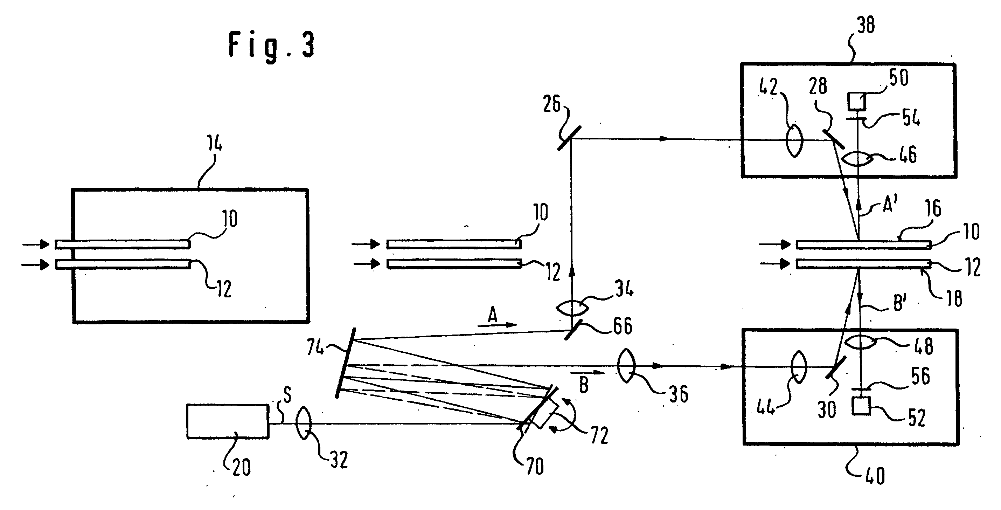

Eine weitere Ausführungsform der Erfindung ist in Fig. 3 gezeigt. Sie ähnelt der Ausführung von Fig. 2, jedoch wird bei der Ausführungsform von Fig. 3 der kippbare Spiegel 70 über einen Piezoelementantrieb 72 verstellt.

Dies hat den Vorteil, daß mit Piezoelementen sehr schnelle und präzise Positionierungen möglich sind, so daß hiermit Modulationsfrequenzen bis zu einigen hundert Hertz bei Tastverhältnisses von nahezu 50% erreichbar sind. Die mit Piezoelementen erreichbare, vergleichsweise geringe Winkelauslenkung läßt sich in einem ausreichenden Maße dadurch vergrößern, daß der Anregungsstrahl S nacheinander auf mehrere Spiegel fällt, die jeweils im Gleichtakt von Piezoelementen angetrieben werden, wobei sich die gesamte Winkelauslenkung mit der Anzahl der Spiegel multipliziert.

Alternativ kann der Anregungsstrahl, wie in Fig. 3 gezeigt, zwischen einem mittels Piezoelement kippbaren Spiegel 70 und einem weiteren kippbaren oder einem feststehenden Spiegel 74 eingekoppelt und mehrfach bis zur Auskopplung hin- und herreflektiert werden, wodurch sich ebenfalls eine vervielfachte Winkelauslenkung erreichen läßt. In Fig. 3 ist gezeigt, wie der Anregungsstrahl S bei einer ersten Stellung des Spiegels 70 einer durchgezogenen Linie folgt und den Anregungsstrahl S in den A-Kanal führt, und wie er bei einer zweiten Stellung des Spiegels 70 der gestrichelten Linie folgt und den Anregungsstrahl in den B-Kanal führt. Beide Anregungskanäle werden schließlich wieder je einem Meßkopf 38 und 40 zugeführt, wie mit Bezug auf Fig. 1 und 2 detailliert beschrieben wurde.

Die Ausführungsform mit Piezoelementen ist besonders sinnvoll, wenn Laserstrahlung zur Anregung eingesetzt werden soll. Piezoelemente sind besonders schnell und hochgenau umschaltbar, und sie ermöglichen in Verbindung mit der Verwendung von Laserstrahlung eine den Aufbau einer Prüfeinrichtung mit relativ kleinen Abmessungen.

Es ist ferner günstig, auch bei dieser Anordnung die Sammellinse 32 vorzusehen, die den Strahlquerschnitt im Bereich des Kippspiegels 70 verringert, wodurch der oder die beweglichen Spiegel 70, 74 wiederum klein ausgelegt werden können. Ferner wird durch eine Fokussierung die geometrische Trennung beider Kanäle auch bei kleinen Winkelauslenkungen erleichtert. Die Sammellinsen 34 und 36 dienen dann wiederum der Kollimierung und gegebenenfalls der Strahlaufweitung.

Bei allen Ausführungsformen kann zusätzlich ein (nicht gezeigter) Strahlenteiler in der Meßkopfanordnung 38 und/oder 40 vorgesehen werden, um die intensitätsmodulierte Anregungsstrahlung auf zwei oder mehr unterschiedliche Prüfstellen auf der Werkstückoberfläche zu lenken.

Die in der vorstehenden Beschreibung, den Figuren und den Ansprüchen definierten Merkmale können sowohl einzeln als auch in beliebiger Kombination für die Verwirklichung der Erfindung wesentlich sein.

## Patentansprüche

1. Verfahren zum zerstörungsfreien photothermischen Prüfen von Werkstücken, insbesondere zur Schichtdickenmessung einer Werkstückbeschichtung, bei dem ein kontinuierlicher elektromagnetischer Anregungsstrahl (S) periodisch in verschiedene Richtungen gelenkt wird, um mindestens zwei intensitätsmodulierte Anregungsstrahlen (A,B) zu erzeugen, welche auf unterschiedliche Prüfstellen einer Werkstückoberfläche (16,18) gerichtet werden, und bei dem die von den Prüfstelle abgegebene Wärmestrahlung erfaßt und ausgewertet wird.

2. Verfahren nach Anspruch 1, **dadurch gekennzeichnet, daß** der Anregungsstrahl (S) mit einer Frequenz im Bereich von annähernd 0,1 bis 500 Hz umgelenkt wird.

3. Verfahren nach Anspruch 1 oder 2, **dadurch gekennzeichnet, daß** der Anregungsstrahl (S) im Tastverhältnis von etwa 50% in zwei Richtungen gelenkt und als zwei um annähernd 180° phasenverschobene Anregungsstrahlen (A, B) moduliert wird.

4. Verfahren nach einem der vorangegangenen Ansprüche, **dadurch gekennzeichnet, daß** der Anregungsstrahl (S, A, B) in mehrere Teilstrahlen aufgeteilt wird.

5. Vorrichtung zum zerstörungsfreien photothermischen Prüfen von Werkstükken, insbesondere zur Schichtdickmessung einer Werkstückbeschichtung, mit einer Anregungsquelle (20) zum Abgeben eines elektromagnetischen Anregungsstrahls (S), einer optischen Einrichtung, welche die Intensität des Anregungsstrahls (S) moduliert, wobei
- Modulationsmittel durch periodisches Ablenken des kontinuierlichen Anregungsstrahls (S) mindestens zwei intensitätmodulierte Anregungsstrahlen (A, B) mit verschiedener Richtung erzeugen,
- Richtmittel die umgelenkten Anregungsstrahlen (A,B) in unterschiedlichen Richtungen auf verschiedenen Prüfstellen der Werkstückoberfläche (16, 18) richten, und
- eine Detektoreinrichtung die von der jeweiligen Prüfstelle abgegebene Wärmestrahlung erfaßt.

6. Vorrichtung nach Anspruch 5, **dadurch gekennzeichnet, daß** die Detektoreinrichtung mehrere Detektoren (50, 52) aufweist, welche die von den verschiedenen Prüfstellen abgegebene Wärmestrahlung erfassen.

7. Vorrichtung nach Anspruch 5 oder 6, **dadurch gekennzeichnet, daß** die Modulationsmittel einen verstellbaren Spiegel (22; 60; 70) aufweisen, mit dem der Anregungsstrahl (S) in die verschiedenen Richtungen lenkbar ist.

8. Vorrichtung nach Anspruch 7, **dadurch gekennzeichnet, daß** der Spiegel (22) drehbar ist, wobei seine Drehachse senkrecht zur Spiegelebene ist und er Ausnehmungen aufweist und relativ zu der Anregungsquelle (20) so angeordnet ist, daß er je nach Drehlage den Anregungsstrahl (S) durchläßt oder reflektiert.

9. Vorrichtung nach Anspruch 8, **dadurch gekennzeichnet, daß** der Spiegel (22) rund ist und an seinem Umfang in regelmäßigen Abständen Segmente ausgeschnitten sind.

10. Vorrichtung nach Anspruch 7, **dadurch gekennzeichnet, daß** der Spiegel (60; 70) schwenkbar ist, wobei seine Schwenkachse parallel zur Spiegelebene ist und er relativ zu der Anregungsquelle (20) so angeordnet ist, daß er je nach Schwenklage den Anregungsstrahl (S) durchläßt oder reflektiert.

11. Vorrichtung nach Anspruch 10, **dadurch gekennzeichnet, daß** der schwenkbaren Spiegel (60; 70), dessen Schwenkachse parallel zur Spiegelebene ist, relativ zu der Anregungsquelle (20) so angeordnet ist, daß er je nach Schwenklage den Anregungsstrahl (S) in eine von mehreren definierten Richtungen reflektiert.

12. Vorrichtung nach Anspruch 11, **dadurch gekennzeichnet, daß** mehrere schwenkbare Spiegel (70, 74) derart angeordnet sind, daß sie einander annähernd gegenüberliegen und daß sie je nach Schwenklage den Anregungsstrahl (S) durch Mehrfachreflexion in eine von mehreren definierten Richtungen lenken.

13. Vorrichtung nach Anspruch 12, **dadurch gekennzeichnet, daß** wenigstens einer der Spiegel (70, 74) mittels eines Piezoelements (72) zwischen zwei definierten Winkellagen hin- und herschwenkbar ist.

14. Vorrichtung nach Anspruch 5, **dadurch gekennzeichnet, daß** die optische Einrichtung wenigstens einen Strahlenteiler zum Aufteilen des Anregungsstrahls (S, A, B) in mehrere Teilstrahlen aufweist.

15. Vorrichtung nach einem der Ansprüche 5 bis 14, **gekennzeichnet durch** eine Sammellinse (32), die zwischen der Anregungsquelle (20) und dem verstellbaren Spiegel (22; 60; 70) angeordnet ist, um den Anregungsstrahl (S) zu fokussieren.

16. Vorrichtung nach Anspruch 15, **dadurch gekennzeichnet, daß** die Richtmittel Linsenanordnungen (34, 36) aufweisen, welche mindestens zwei intensitätsmodulierten Anregungsstrahlen (S, A, B) kollimieren.

## Claims

1. A method for the non-destructive photothermal testing of workpieces, more particularly for measuring the thickness of a workpiece coating, wherein a continuous electromagnetic excitation beam (S) is periodically deflected in different directions in order to generate at least two intensity-modulated excitation beams (A, B) which are directed at different test sites of a workpiece surface (16, 18), and wherein the heat radiation delivered by the test site is detected and evaluated.

2. A method according to claim 1, **characterised in that** the excitation beam (S) is deflected with a frequency in the range from approximately 0.1 to 500 Hz.

3. A method according to claim 1 or 2, **characterised in that** the excitation beam (S) is deflected in two directions in a duty cycle of about 50% and is modulated as two excitation beams (A, B) phase-shifted by approximately 180°.

4. A method according to any one of the preceding claims, **characterised in that** the excitation beam (S, A, B) is divided into a number of sub-beams.

5. Apparatus for the non-destructive photothermal testing of workpieces, particularly for measuring the thickness of a workpiece coating, comprising an excitation source (20) for delivering an electromagnetic excitation beam (S), an optical device to modulate the intensity of the excitation beam (S), wherein
- modulation means produce at least two intensity-modulated excitation beams (A, B) with different directions by periodic deflection of the continuous excitation beam (S),
- directing means to direct the deflected excitation beams (A, B) in different directions to different test sites of the workpiece surface (16, 18), and
- a detector device to detect the heat radiation delivered by the respective test site.

6. Apparatus according to claim 5, **characterised in that** the detector device comprises a plurality of detectors (50, 52) which detect the heat radiation delivered by the different test. sites.

7. Apparatus according to claim 5 or 6, **characterised in that** the modulation means comprise an adjustable mirror (22; 60; 70) by means of which it is possible to deflect the excitation beam (S) into the different directions.

8. Apparatus according to claim 7, **characterised in that** the mirror (22) is rotatable, its axis of rotation being perpendicular to the mirror plane, and said mirror (22) has recesses and is so disposed relatively to the excitation source (20) that it transmits or reflects the excitation beam (S) depending upon its rotated position.

9. Apparatus according to claim 8, **characterised in that** the mirror (22) is round and segments are cut out of its periphery at regular intervals.

10. Apparatus according to claim 7, **characterised in that** the mirror (60; 70) is pivotable, its pivot axis being parallel to the mirror plane and said mirror (60, 70) being so disposed relatively to the excitation source (20) that it transmits or reflects the excitation beam (S) depending on the pivoted position.

11. Apparatus according to claim 10, **characterised in that** the pivotable mirror (60; 70), the pivot axis of which is parallel to the mirror plane, is so disposed relatively to the excitation source (20) that it reflects the excitation beam (S) in one of a plurality of defined directions depending upon the pivoted position.

12. Apparatus according to claim 11, **characterised in that** a plurality of pivotable mirrors (70, 74) are so disposed as to be situated approximately opposite one another and **in that** they deflect the excitation beam (S) into one of a plurality of defined directions by multiple reflection depending on the pivoted position.

13. Apparatus according to claim 12, **characterised in that** at least one of the mirrors (70, 74) is adapted to pivot to and fro between two defined angle positions by means of a piezo element (72).

14. Apparatus according to claim 5, **characterised in that** the optical device comprises at least one beam splitter for splitting the excitation beam (S, A, B) into a plurality of sub-beams.

15. Apparatus according to any one of claims 5 to 14, **characterised by** a collecting lens (32) disposed between the excitation source (20) and the adjustable mirror (22; 60; 70) in order to focus the excitation beam (S).

16. Apparatus according to claim 15, **characterised in that** the directional means comprise lens arrangements (34, 36) which collimate at least two intensity-modulated excitation beams (S, A, B).

## Revendications

1. Procédé pour l'examen photothermique non destructif de pièces à usiner, en particulier pour la mesure de l'épaisseur d'un revêtement de pièce, dans lequel un rayonnement d'excitation électromagnétique continu (S) est orienté périodiquement dans diverses directions, pour obtenir au moins deux rayonnements d'excitation modulés en intensité (A, B) qui sont dirigés sur des endroits d'examen différents d'une surface de pièce (16, 18), et dans lequel le rayonnement thermique fourni par les endroits d'examen est saisi et évalué.

2. Procédé selon la revendication 1, **caractérisé en ce que** le rayonnement d'excitation (S) est dévié à une fréquence comprise approximativement entre 0,1 et 500 Hz.

3. Procédé selon la revendication 1 ou 2, **caractérisé en ce que** le rayonnement d'excitation (S) est dirigé dans deux directions avec un taux d'environ 50 % et est modulé pour former deux rayonnements d'excitation (A, B) déphasés d'environ 180°.

4. Procédé selon l'une des revendications précédentes, **caractérisé en ce que** le rayonnement d'excitation (S, A, B) est divisé en plusieurs rayonnements partiels.

5. Dispositif pour l'examen photothermique non destructif de pièces à usiner, en particulier pour la mesure de l'épaisseur d'un revêtement d'une pièce à usiner, comportant une source d'excitation (20) pour fournir un rayonnement d'excitation électromagnétique (S), un dispositif optique qui module l'intensité du rayonnement d'excitation (S), dans lequel :
- des moyens de modulation produisent, par une déviation périodique du rayonnement d'excitation continu (S), au moins deux rayonnements d'excitation modulés en intensité (A, B) présentant des directions différentes,
- des moyens de direction, qui dirigent les rayonnements d'excitation déviés (A, B) dans des directions différentes sur des endroits d'examen différents de la surface de la pièce (16, 18), et
- un dispositif de détection, qui saisit le rayonnement thermique fourni par les endroits d'examen respectifs.

6. Dispositif selon la revendication 5, **caractérisé en ce que** le dispositif de détection comporte plusieurs détecteurs (50, 52), qui saisissent le rayonnement thermique fourni par les différents endroits d'examen.

7. Dispositif selon la revendication 5 ou 6, **caractérisé en ce que** les moyens de modulation comportent un miroir orientable (22 ; 60 ; 70), grâce auquel le rayonnement d'excitation (S) peut être dirigé dans les directions différentes.

8. Dispositif selon la revendication 7, **caractérisé en ce que** le miroir (22) est rotatif, son axe de rotation étant perpendiculaire à la surface du miroir et **en ce qu'**il présente des creux et est disposé par rapport à la source d'excitation (20) de sorte que, selon la position de rotation, il laisse passer ou réfléchit le rayonnement d'excitation (S).

9. Dispositif selon la revendication 8, **caractérisé en ce que** le miroir (22) est rond et **en ce que** des segments sont découpés à intervalles réguliers sur sa périphérie.

10. Dispositif selon la revendication 7, **caractérisé en ce que** le miroir (60 ; 70) peut osciller, son axe d'oscillation étant parallèle à la surface du miroir, le miroir étant disposé par rapport à la source d'excitation (20) de sorte que, selon la position d'oscillation, il laisse passer ou réfléchit le rayonnement d'excitation (S).

11. Dispositif selon la revendication 10, **caractérisé en ce que** le miroir oscillant (60 ; 70), dont l'axe d'oscillation est parallèle à la surface du miroir, est disposé par rapport à la source d'excitation (20) de sorte que, selon la position d'oscillation, il réfléchit le rayonnement d'excitation (S) dans une de plusieurs directions déterminées.

12. Dispositif selon la revendication 11, **caractérisé en ce que** plusieurs miroirs oscillants (70, 74) sont disposés de façon à se faire face approximativement, et **en ce qu'**ils orientent par réflexions multiples le rayonnement d'excitation (S) dans une de plusieurs directions déterminées, selon la position d'oscillation.

13. Dispositif selon la revendication 12, **caractérisé en ce qu'**au moins un des miroirs (70, 74) peut osciller entre deux positions angulaires déterminées grâce à un élément piézoélectrique (72).

14. Dispositif selon la revendication 5, **caractérisé en ce que** le dispositif optique comporte au moins un diviseur de rayonnement pour diviser le rayonnement d'excitation (S, A, B) en plusieurs rayonnements partiels.

15. Dispositif selon une des revendications 5 à 14, **caractérisé par** une lentille convergente (32) disposée entre la source d'excitation (20) et le miroir orientable (22 ; 60 ; 70) pour focaliser le rayonnement d'excitation (S).

16. Dispositif selon la revendication 15, **caractérisé en ce que** les moyens de direction comportent des agencements à lentille (34, 36) qui servent de collimateur à au moins deux rayonnements d'excitation modulés en intensité (S, A, B).
